# EUROPEAN PATENT SPECIFICATION

(11) **EP 1 547 321 B1**
(45) Date of publication and mention of the grant of the patent: **14.11.2007**
(21) Application number: 03795028.4
(22) Date of filing: 12.09.2003
(51) Int. Cl.: H04L 12/46, H04L 12/56, H04L 12/28

(54) **METHOD FOR DETERMINING A PARENT PORTAL IN A WIRELESS NETWORK AND CORRESPONDING PORTAL DEVICE**
VERFAHREN ZUR BESTIMMUNG EINES ÜBERGEORDNETEN PORTALS IN EINEM DRAHTLOSEN NETZWERK UND ENTSPRECHENDE PORTALEINRICHTUNG
PROCEDE DE DETERMINATION D'UN PORTAIL PARENT DANS UN RESEAU SANS FIL ET DISPOSITIF DE PORTAIL CORRESPONDANT

(30) Priority: 12.09.2002 EP 02292227
(43) Date of publication of application: 29.06.2005
(73) Proprietor: Thomson Licensing, 92100 Boulogne-Billancourt (FR)
(72) Inventor: PERROT, Sébastien, 92130 Issy-les-Moulineaux (FR); STRAUB, Gilles, F-35690 ACIGNE (FR); BURKLIN, Helmut, F-35000 Rennes (FR)
(74) Representative: Kohrs, Martin
(86) International application number: PCT/EP2003/050624
(87) International publication number: WO 2004/025905

(56) References cited:
- EP-A- 0 932 279
- WO-A-93/07691
- WO-A-95/12942
- HART J: "EXTENDING THE IEEE 802.1 MAC BRIDGE STANDARD TO REMOTE BRIDGES" IEEE NETWORK, IEEE INC. NEW YORK, US, vol. 2, no. 1, 1988, pages 10-15, XP000619560 ISSN: 0890-8044
- "BROADBAND RADIO ACCESS NETWORKS (BRAN);HIPERLAN TYPE 2; PACKET BASED CONVERGENCE LAYER; PART 3: IEEE 1394 SERVICE SPECIFIC CONVERGENCE SUBLAYER (SSCS)" ETSI TS 101 493-3 V1.1.1, XX, XX, September 2000 (2000-09), pages 1-74, XP002190834

## Description

The invention concerns a method for determining a parent portal in a wireless network, in particular when this wireless network constitutes a bridge transparent to devices connected to the portals. It also concerns a portal device.

It is known to interconnect several wired communication busses using one or more wired or wireless bridges. Bridges may comprise two or more portals, each portal being connected to a bus or sub-network. In the resulting network, each bus or sub-network may remain distinct (e.g. each bus retains its own bus identifier), although devices - depending on their capabilities and of their awareness of the bridges - may or may not communicate with devices on other busses or sub-networks. Another approach is to use so-called transparent bridges, which are not visible to certain devices, or at least certain software layers of these devices. For example, it is possible to interconnect two or more IEEE 1394 busses using transparent bridges to create a single 'virtual' IEEE 1394 bus. Devices connected to one of the real busses are led to believe that all devices of the network are present on a single bus.
This approach is developed in two patent applications filed by the applicant of the present application. PCT application WO02/098061, published on December 5, 2002 and entitled 'Method for managing a communication network comprising wireless links with more than two wireless devices' describes the architecture, the association and reset process and the establishment of connections in a network comprising transparent bridges. PCT application WO02/089421, published on Nov. 7, 2002 and entitled 'Interface circuit' details the physical layer used to receive and send reset related information used by the bridge portals in this context. Both applications are filed in the name of Thomson Licensing S.A..
The virtual bus or network resulting from the interconnection of busses or sub-networks using transparent bridges follows the rules to which a real bus or network is submitted. For example, in the case of IEEE 1394, a virtual has a similar topology, featuring parent and child devices connected through ports, which are used during the reset process. Also, the total number of devices on the virtual bus may not, in the specific example, exceed 63 devices.

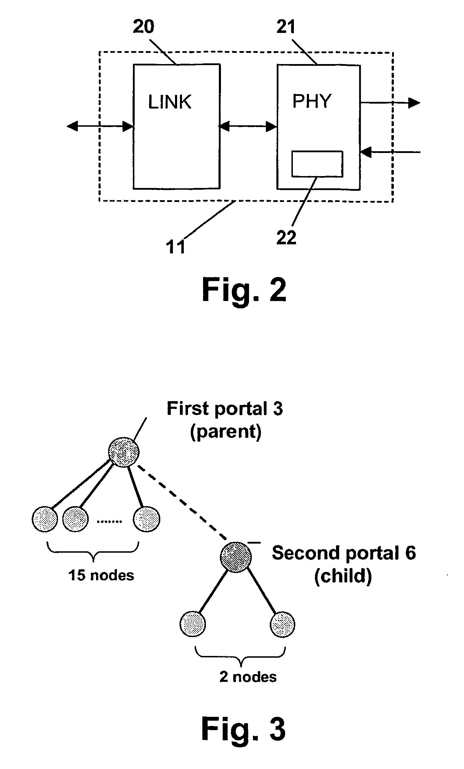

The ports of devices of the virtual bus may be physical ports - e.g. physically connecting a child device to a parent device on a real bus, or be virtual - e.g. logically connecting - for the purpose of the simulation of a single virtual bus - two portals on the wireless bridge.
The problem is that, in order to respect the rules valid for a real bus or sub-network the number of ports of a device may be limited, e.g. 16 in case of the IEEE 1394 bus. As a consequence, depending on the topology of the portals in the virtual bus, it may not be possible to connect a new portal if a corresponding 'virtual' port is unavailable on a parent portal. This problem is illustrated by figure 3, which shows a topology of a network comprising a first portal device (Portal 1) connected over an IEEE 1394 bus to 15 devices through the same number of physical ports, and over a transparent to a second portal device through a 16^{th} - 'virtual' - port. If the first portal is a parent device in the sense of e.g. the IEEE 1394 topology and if a new portal is to be connected to the wireless network, there is no possibility of connecting the new portal.

Examples of the state of the art in the present technical field are disclosed in documents WO 95/12942, WO 93/07691 and EP0932279.

The invention concerns a for parent election in a transparent wireless bridge, said bridge comprising at least two bridge portals, said method comprising the steps of:
- determining for each bridge portal the number of ports to which other wireless devices may be connected;
- electing a bridge portal as parent as a function of the number of such ports,
- connecting other bridge portals to the elected parent portal.

According to the invention, the topology is changed in order to select a new parent portal on the wireless network, where this new parent portal is selected on the basis of available virtual ports.

According to an embodiment of the invention, the sum of the number of virtual ports and of the number of physical ports of a bridge portal is limited to a predefined number, and wherein the number of virtual ports and physical ports is configurable.
According to an embodiment of the invention, the elected portal is the only portal that may not be root on a local bus connected to that elected portal.

According to an embodiment of the invention, the method further comprises the step of triggering the election of the parent bridge portal following the association of a new bridge portal.
According to an embodiment of the invention, the method further comprises the step of, prior to triggering the election, verifying whether the current parent portal has a free virtual port, and in the affirmative, connecting the new portal to that port without triggering the election.
According to an embodiment of the invention, the method further comprises the step of rejecting the connection of a new portal if the connection of the new portal would result in an invalid topology.
According to an embodiment of the invention, the method further comprises the step of storing, at the level of a portal device, at least one of the following: the failure cause of a connection of the portal to the parent portal, the failure of association of the portal a central controller of the wireless bridge, the failure cause of becoming the parent portal.
According to an embodiment of the invention, the portal elected as parent portal in an initial configuration of the network is the portal with the greatest number of virtual ports.

The invention also concerns a bridge portal device for connection to a wireless bridge comprising a first interface to a wired bus and a second interface to the wireless bridge, characterized in that it comprises microprocessor means for managing ports on its wireless interface for connection to wireless devices according to topology rules defined for the wired bus, said microprocessor means being adapted to participate in a parent portal election process which is function of the availability of free ports on the wireless interfaces of portal devices of the bridge.

A non-restrictive embodiment of the invention will now be described with the help of the following drawings, which form an integral part of the present description.
Figure 1, schematically represents a network comprising two busses connected by a wireless bridge.
Figure 2 shows a partial block diagram of a portal device, comprising a modified PHY layer.
Figure 3 is a diagram of a first topology of the network of figure 1.
Figure 4 is a diagram of the network of figure 3, after addition of a portal and election of a new parent portal.

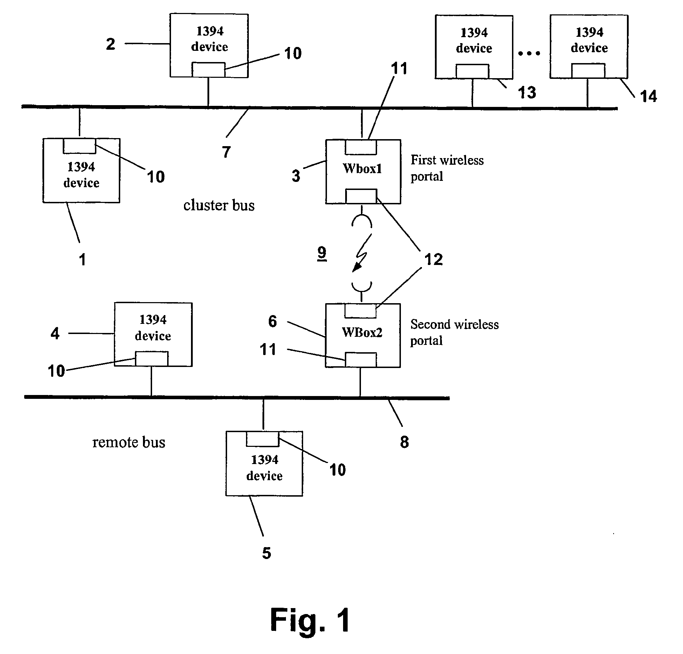

Figure 1 shows two IEEE 1394 busses with IEEE 1394 bus nodes and a wireless bridge in-between. The first IEEE 1394 bus has reference number 7. A number of IEEE 1394 devices are connected to this bus, of which only a few are shown with reference numbers 1, 2, 13 and 14. Such devices can be consumer electronics devices such as TV sets, VCRs, Camcorders, Set Top Boxes, DVD players, etc. or a computer device like a PC, Notebook, etc. Each of these devices is a standard compliant IEEE 1394 device and has a corresponding IEEE 1394 interface 10.

With reference number 3 a first transceiver box for the wireless bridge or link 9 is denoted. This box, also referred to as 'portal', needs to have a IEEE 1394 interface because it is also connected to the 1394 bus lines 7. The corresponding interface has reference number 11 in Fig. 1. This interface is different from that of devices such as devices 1 and 2. IEEE 1394 interface 11 has additional functionalities, as described below. Portal 3 further has another interface 12 for wireless transmission. There are wireless protocols already existing supporting high-speed communication. In the present embodiment, the Hiperlan system is used, but the invention is not limited to this context. The document 'Broadband Radio Access Networks (BRAN); Hiperlan Type 2; Packet based convergence layer; Part 3: IEEE 1394 Service Specific Convergence Sublayer (SSCS)" defines a sublayer emulating the IEEE 1394 link layer over an ETSI BRAN Hiperlan 2 wireless network. Other examples of wireless communication protocols for the wireless link are the IEEE 802.11 specification and the Bluetooth specification.
It is to be noted that a 'portal' may also be a stand-alone wireless device, which is not connected to further sub-network such as an IEEE 1394 bus.

There is another cluster of IEEE 1394 devices shown in Fig. 1 having its own IEEE 1394 bus 8. Two IEEE 1394 devices 4 and 5 are depicted having standard IEEE 1394 interfaces 10. A second box 6 for the wireless bridge 9 is connected to the bus 8 as well. It is required that the total amount of bus stations in both clusters together inclusive wireless transceiver boxes 3 and 6 is less than or equal to 63. This is because with the wireless bridge 9 both clusters are merged together and data communication between devices from different clusters is from the point of view of the IEEE 1394 devices by no means different than for communication between devices in one cluster. Thus, at least some of the rules applicable to a single cluster also apply to the entire network, which can be called a 'virtual' IEEE 1394 bus or cluster. The maximum allowed number of bus nodes in an IEEE 1394 cluster is 63.

Fig. 2 shows a structure of an IEEE 1394 interface 10 integrated in each portal 3, 6 or 15. The IEEE 1394 interface is subdivided into two parts: a physical layer section 21 and a data link layer section 20. Both can be integrated in a single chip or two distinct chips. In principle, it would also be possible to have the data link layer section implemented in software running on a micro-controller. The modified IEEE 1394 interface 11 has the same basic structure. It contains however a memory 22 for storing self-id packet related information, which is used as explained below.
The portals further comprise a microprocessor and memory for carrying out the processes according to the present embodiment. They also comprise a Hiperlan 2 stack.

To understand the modification of the physical layer chip it is helpful to first explain what happens in case of a bus reset. A bus reset is performed each time an IEEE 1394 node is removed from or connected to the bus. A node can be removed from or connected to the bus without switching off the network. An insertion or removal of a node is accompanied by a specific voltage change on the bus lines. This is detected by electronic means, and triggers the bus reset. After a bus reset, a self-configuration phase for the network takes place. During the self-configuration phase, each node sends its self-ID packet to the bus to inform every other node in the network of its existence.

A self-ID packet consists of 64 bits where the last 32 bits are the inverse of the first 32 bits. The contents of the fields of the self-ID packets are explained in the IEEE 1394 standard. Some of them will be explained here. At the beginning of a self-ID packet, the physical ID-number of the node can be found. This field has a length of 6 bits corresponding to the numbers 0 ... 63. At the end of the self-ID packets there are 2-bit fields for the ports P0 to P2 of a node. The two bits indicate not only the existence of the port in the node but also whether the port is active and connected to a parent or child in the bus topology. According to the IEEE1394 bus standard, a node can be equipped with up to 16 ports. If a node has more than three ports, the status of these other ports will be reported in a second or third self-ID packet. The last bit m in the self-ID packet indicates whether the node has some further ports or not. With the IEEE 1394 bus, data communication is possible with half-duplex operation mode. Therefore, only one node is sending data to the bus and the rest is listening. The bus is granted to the nodes in a deterministic manner depending on the bus topology (in particular whether a node is branch or leaf). The physical ID number is assigned to the nodes in the order of bus grant beginning from Zero. For addressing a data packet not only the physical ID-number (node-ID) is used. Each bus also has a bus-ID, which needs to be taken into account during addressing.

In case of the bus structure shown in Fig. 1, a number of problems occur during self-configuration after a bus reset. The devices are not aware of the wireless link in the network. The bridge makes a bus reset isolation. The self-ID packets need to be forwarded from one cluster to the other via the wireless link.

As an example, it is considered that a bus reset happened on bus 7. The reset is detected by all stations 1, 2, 3 in the cluster. After the bus reset the nodes will send their self-ID packets one after the other. Each node in the cluster will collect the corresponding information in a higher software layer, e.g. in the transaction layer in order to be able to generate the right addresses later on. The interface 11 in the portal 3 also receives each self-ID packet and forwards them via the wireless link to the second portal 6. Also the portal 3 generates a self-ID packet and sends it to the IEEE 1394 bus 7. In the first attempt, device 3 operates in legacy mode and generates a self-ID packet without taking into account that in case that the bridge were replaced by a IEEE 1394 cable, it would have a different physical ID number.

After having collected all self-ID packets from the cluster bus, the portal 3 initiates a bus reset on the bus by software means. Again the self-ID packets are transmitted over the cluster bus. The difference is that when it is the turn of the portal 3 to send its self-ID packet, it will generate not only its own self-ID packet but also all the self-ID packets of the nodes on the remote cluster whereby the portal 3 generates the self-ID packets under consideration of the topology which would result if the wireless link were replaced by an IEEE 1394 cable. In the following, the self-ID packets generated by portal 3 in representation of the nodes in the cluster bus are called artificial self-ID packets.

Next, a bus reset is also initiated on the remote bus 8 by software means in portal device 6. The portal device 6 has collected all self-ID packets from the cluster bus and generates the corresponding artificial self-ID packets in this phase. After this phase the self-configuration is over and normal data communication can start or continue.

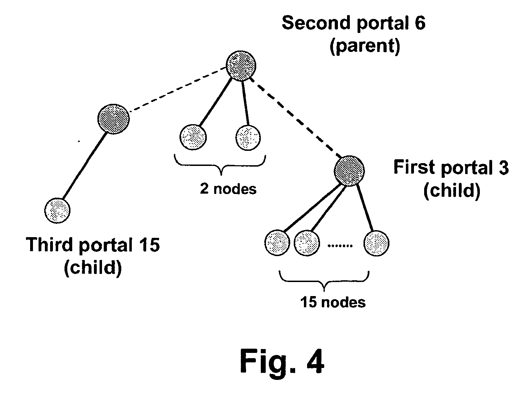

As indicated above, an IEEE 1394 node can have up to 16 ports. Since from the topological point of view, there is no distinction between a physical port connecting a portal to a node on its local bus and a virtual port connecting a portal to another portal over the wireless medium, the 16 ports are split between real and virtual ports.
A portal, e.g. the first portal of figure 1, may have fifteen ports attached to IEEE 1394 devices, and one port attached to another portal, e.g. portal 2. If portal 1 is parent in the topology, compared to all other portals, no further portal may be connected for integration into the virtual bus.
The inventors have recognized that other portals than the parent portal may have free virtual ports. One of these other portals is then chosen as parent for the remaining portals in the topology. In the example of figure 3, portal 2 has thirteen free ports. Figure 4 illustrates a new topology following a connection of a third portal, reference 15. According to the preferred embodiment, if a new portal is added to the network, then it should be connected to one of the 'free' ports of the current parent portal. Connected devices then see only a minimum change in the topology (e.g. adding of a new branch), which may minimize bus traffic (devices do not need to learn again the identity of all connected devices if they adopt an appropriate node identification procedure, such as the one described in patent application EP0961453, filed on May 21, 1999.. If it is not possible to keep the current parent, but it appears possible to build a valid topology by electing a different parent, then this is done. If it is not possible to determine a valid configuration, the new portal is not connected, and the current configuration is maintained.
The number of ports allocated to the wired and wireless side may be fixed or configurable. Even if a great number of physical ports are available, certain of these ports can be disabled to free ports for connection of wireless children. The present embodiment assumes that the modified PHY is able to handle more than one virtual port.
According to the preferred embodiment, devices to be connected to a real port and devices to be connected over a virtual port have the same priority, on a first come first serve basis.
When a device is connected to a portal device, a port of that device is set to active - whether the connected device is an IEEE 1394 device or another portal. A port may be allocated to a wired or a wireless device.
According to a variant embodiment, a portal may deactivate a connection to another portal through a virtual port in order to allow the connection of a device on a real port. The IEEE 1394 device has then priority over a portal. The converse is not true: a portal cannot disconnect a device on its local wired bus to replace it by a portal on a virtual port. According to the preferred embodiment, the number of ports of each type of a device is fixed, but according to a variant embodiment, it is variable, and eventually configurable by the user.
In the first case, the number of wired ports and wireless ports is fixed. Either number may be dependent on the function the portal will have. If the portal is to be connected to many wired devices, the number of wired ports is increased. If it is planned to use the portal as a parent in the wireless bridge, , the number of wireless ports is increased, at the expense of the number of real ports.

In the case the number of ports of each type is configurable, the user can dynamically set the number of real ports and virtual ports.
If the user intends to connect the device to several wired devices, he/she may choose allocate more ports for this purpose.

### Parent portal node election

The election of a parent portal will now be described. Unless otherwise specified, the process is carried out by a portal, preferably the parent portal.
The following applies when the number of virtual ports on portals is different. If the number is the same on each portal, election has to be based on another criterion than on the number of virtual ports.

The first case consists in adding a portal to an existing wireless network
If a new portal is added to the network, then it should be connected to one of the 'free' virtual ports of the current parent portal, unless the resulting topology is deemed invalid (too many nodes in the resulting network, for example). Connected devices will then see only a minimum change in the topology (i.e. addition of a new branch), which may minimize bus traffic. If it is not possible to keep the current parent portal because of lack of free port, but it appears possible to obtain a valid topology by electing a different parent portal, then this is carried out. If it is not possible to determine a valid configuration after having taken into consideration all portals as potential parent portal (including the new portal), then the new portal is not connected, and the current configuration is maintained.
The detailed procedure will be described now.

Association in case of connection to an existing network is performed as follows:
When a new portal joins the wireless network, a radio link control layer (rlc) association procedure is performed between the Central Controller of the Hiperlan 2 network and the new portal. Portals can now exchange information; this allows the joining portal to detect which of the other portals is currently the parent.

Although associated to the wireless network in the sense of Hiperlan 2, the new portal is not yet connected in the sense of being integrated into the IEEE 1394 virtual bus topology. The new portal performs a bus reset on its local cluster (this may be done before or after the association). Preferably, the portal tries to become root on its local bus. This may be done by generating several bus resets trying to force the root. According to the preferred embodiment, when a bus reset occurs on a bus where the new portal is not the root, the portal should try to become root only in the case the previous root left the bus. In the case the previous root is still on the bus, the portal does not try to become root. This is not necessary because the node that is root would probably prevent the portal from being root. This avoids bus reset storms.
The new portal then communicates to the current parent appropriate information about its capabilities (e.g. the number of virtual ports that it can implement), and about the local configuration (topology data including the number of devices connected to its local bus and whether it has become root or not).

The current parent processes this information together with information it holds concerning the current configuration of the rest of the network.
If the new portal is root on its bus, and the current parent has a free virtual port available to connect it, and the resulting number of devices does not exceed 63, then the portal is connected, and appropriate resets are carried out in the network to create the new topology. According to a variant embodiment, the hop count of the new configuration must not exceed 16.
If the resulting number of devices were to exceed 63, the new portal is not connected, and the current parent remains. A bus-reset procedure is then not necessary. If a reset is carried out nevertheless, the current parent tries to stay parent.
If the new portal is not root on its bus, and has sufficient capabilities (regarding available ports), the current parent checks if itself is root on its bus. If this is the case, the new portal becomes the parent. If not, the current parent initiates a bus-reset procedure in order to become root. If it does not succeed, the new portal is not connected.
If the current parent has not enough virtual ports, and if another portal (including the newcomer) has a sufficient number of virtual ports, it is verified whether this portal may become parent. If all portals are roots on their respective local bus, or there is a single portal that is not root, and this portal has sufficient capabilities, then it shall become the new parent. If this is not the case (i.e. the current parent is not able to become root), then the new portal is not connected.
In order to allow proper reset propagation, there is at most one portal that is not root on its bus, and if there is such a portal, then it is necessarily the parent.

The rest of the connection procedure follows the procedure described in the PCT application WO02/098061 mentioned in the introduction.

The second case concerns the occurrence of a bus reset.

If the parent portal is root and a bus reset occurs on a bus where the child portal loses its root status, the rule is that the child becomes the new parent if it has a sufficient number of virtual ports.
If the parent is not root and a bus reset occurs on a bus where the child loses its root status, the child is disconnected.
If the parent is root and bus resets occur on more than one bus at the same time and result in a root status loss for several child portals, one of the children is chosen as the new parent if it has a sufficient number of virtual ports. The other children are disconnected.
If the parent is not root and bus resets occur on more than one bus at the same time and result in a root status loss for several child portals, these child portals are disconnected.

The third case concerns the initial configuration of the wireless network
When a wireless network is initially set up, there is no current parent portal. According to the preferred embodiment, a distributed procedure is proposed here.
Another possibility would be to use the same procedure as described for the first case, but replacing the current parent by the 'most capable' portal as defined below.

When a new wireless network is set up (in a way similar t when a new portal joins the network), an rlc-association procedure is performed towards the Central Controller in the patent application cited above. Portals can then exchange information.
All portals perform a bus reset on their local cluster. This may be carried out before or after the association. Each portal tries to become root on its local bus, unless they already are. Each associated portal then communicates to all other associated portals information about its capabilities (i.e. the number of virtual ports that it can implement), and about the local configuration (topology data including the number of devices and whether it has become root or not).
Each portal processes the collected information.
The 'most capable' portal is defined as the one that supports the highest number of virtual ports. If several portals support the same number, a procedure allowing all portals to agree on the ranking and on the selection of a same portal as the most capable portal, as e.g. using a unique identifier built into the boxes, and selecting among the candidates the portal having the highest reverse identifier.
If only a single portal is not root, it shall become parent.
If several portals are not root, the most capable shall become parent.
If all portals are root, the most capable shall become parent.
The parent decides which other portals it connects to its wireless ports. It shall do this by respecting the restriction concerning the resulting number of devices (not to exceed 63). According to the already-mentioned variant embodiment, the condition that the hop count of the new configuration must not exceed 16 can also be taken into account.

The rest of the connection procedure follows the procedure described the patent application mentioned above.

According to the preferred embodiment, it is proposed to store in each portal (using e.g. a register in the configuration ROM structure as defined by IEEE P1212) that holds local information about the outcome of the last configuration/association procedure, as seen by each portal. The coding of this information store is standardized between portals, so that a device with an appropriate application on the wired bus is able to read this information and to inform the user about failure causes of a configuration.
The message to the user may for example consist in: 'This portal had not a sufficient number of virtual ports to connect all other portals", or "This portal failed to become root and was not connected", or "The portal failed to associate".
According to a variant embodiment, a portal comprises a second information store, which holds global information about the outcome of the last configuration/association procedure, as seen by the parent. This information store shall be written to through an exchange of rlc-messages, since the information exchange should also be possible between the parent and any portals that were not connected. This information store is used by a portal only if it is the parent portal. As before, it can be read by an appropriate application of a device to give feedback to the user.

Although the embodiment is based on IEEE 1394 busses connected by a Hiperlan 2 wireless network, the Man Skilled in the Art can easily adapt the invention to other busses, sub-networks and bridge mediums.

## Claims

1. Method for parent election among bridge portals in a transparent wireless bridge (9), said bridge comprising at least two bridge portals (3, 6, 15), a portal comprising a wireless interface and an interface to a wired bus, said method comprising the steps of:
- determining for each bridge portal (3, 6, 15) the number of ports to which other wireless devices can be connected;
- electing one bridge portal (6) as parent as a function of the number of such ports,
- connecting the other bridge portals (3, 15) to the ports of the elected parent portal (6).

2. Method according to claim 1, wherein the sum of the number of ports on the wireless interface of a bridge portal, called virtual ports hereafter, and of the number of physical ports of a bridge portal on the wired bus interface is limited to a predefined number, and wherein the respective number of virtual ports and physical ports is configurable.

3. Method according to claim 1 or 2, the elected portal is the only portal that may or may not be root on a local bus connected to that elected portal.

4. Method according to one of the preceding claims, further comprising the step of triggering the election of the parent bridge portal following the association of a new bridge portal.

5. Method according to claim 4, further comprising the step of, prior to triggering the election, verifying whether the current parent portal has a free virtual port, and in the affirmative, connecting the new portal to that port without triggering the election.

6. Method according to one of the preceding claims, further comprising the steps of rejecting the connection of a new portal if the connection of the new portal would result in an invalid topology.

7. Method according to one of the preceding claims, further comprising the step of storing, at the level of a portal device, at least one of the following: the failure cause of a connection of the portal to the parent portal, the failure of association of the portal a central controller of the wireless bridge, the failure cause of becoming the parent portal.

8. Method according to claims 1 to 7, wherein the portal elected as parent portal is the portal with the greatest number of virtual ports.

9. Method according to one of the claims 1 to 8, wherein a physical port is a port available for connection to a device on a wired bus.

10. Bridge portal device (3, 6, 15) for connection to a wireless bridge (9) comprising a first interface(11) to a wired bus (7,8) and a second interface (12) to the wireless bridge (9),
further comprising:
microprocessor means for managing ports on its wireless interface (12) for connection to wireless devices according to topology rules defined for the wired bus (7, 8), said microprocessor means being adapted to participate in a parent portal election process among bridge portals which is function of the availability of free ports on the wireless interfaces of portal devices (3, 6, 15) of the bridge (9).

11. Bridge portal device according to claim 10, wherein the parent portal election process carried out by the microprocessor means selects as parent portal for the wireless network the portal with the greatest number of virtual ports.

## Patentansprüche

1. Verfahren zur Mutterportalwahl unter Brückenportalen in einer transparenten drahtlosen Brücke (9), wobei diese Brücke mindestens zwei Brückenportale (3, 6, 15) umfaßt, wobei ein Portal eine drahtlose Schnittstelle und eine Schnittstelle zu einem Drahtbus umfaßt, wobei das Verfahren folgende Schritte umfaßt:
- Bestimmen für jedes Brückenportal (3, 6, 15) der Anzahl von Anschlüssen, mit denen andere drahtlose Vorrichtungen verbunden werden können;
- Wählen eines Brückenportals (6) als Mutterportal als Funktion der Anzahl solcher Anschlüsse,
- Anschließen anderer Brückenportale (3, 15) an die Anschlüsse des gewählten Mutterportals (6).

2. Verfahren nach Anspruch 1, wobei die Summe der Anzahl von Anschlüssen an der drahtlosen Schnittstelle eines Brückenportals, hiernach virtuelle Anschlüsse genannt, und der Anzahl physikalischer Anschlüsse eines Brückenportals an der Drahtbusschnittstelle auf eine vordefinierte Anzahl begrenzt ist und wobei die jeweilige Anzahl virtueller Anschlüsse und physikalischer Anschlüsse konfigurierbar ist.

3. Verfahren nach Anspruch 1 oder 2, wobei das gewählte Portal das einzige Portal ist, das Wurzel an einem mit diesem gewählten Portal verbundenen lokalen Bus sein kann oder nicht.

4. Verfahren nach einem der vorhergehenden Ansprüche, weiterhin mit dem Schritt des Auslösens der Wahl des Mutter-Brückenportals nach Zuordnung eines neuen Brückenportals.

5. Verfahren nach Anspruch 4, weiterhin mit dem Schritt des Überprüfens vor Auslösen der Wahl, ob das gegenwärtige Mutterportal einen freien virtuellen Anschluß aufweist und, wenn ja, Verbinden des neuen Portals mit diesem Anschluß ohne Auslösen der Wahl.

6. Verfahren nach einem der vorhergehenden Ansprüche, weiterhin mit den Schritten des Zurückweisens des Anschließen eines neuen Portals, wenn das Anschließen des neuen Portals eine ungültige Topologie ergeben würde.

7. Verfahren nach einem der vorhergehenden Ansprüche, weiterhin mit dem Schritt des Speicherns, auf Ebene einer Portaleinrichtung, von mindestens einem der folgenden: der Versagensursache eines Anschlusses des Portals an das Mutterportal, des Versagens der Zuordnung des Portals zu einer Zentralsteuerung der drahtlosen Brücke, der Versagensursache, das Mutterportal zu werden.

8. Verfahren nach Ansprüchen 1 bis 7, wobei das als Mutterportal gewählte Portal das Portal mit der größten Anzahl von virtuellen Anschlüssen ist.

9. Verfahren nach einem der Ansprüche 1 bis 8, wobei ein physikalischer Anschluß ein zum Anschließen an eine Vorrichtung an einem Drahtbus verfügbarer Anschluß ist.

10. Brückenportaleinrichtung (3, 6, 15) zum Anschließen an eine drahtlose Brücke (9) mit einer ersten Schnittstelle (11) zu einem Drahtbus (7, 8) und einer zweiten Schnittstelle (12) zur drahtlosen Brücke (9), weiterhin mit Mikroprozessormitteln zum Verwalten von Anschlüssen an ihrer drahtlosen Schnittstelle (12) zum Anschließen an drahtlose Vorrichtungen gemäß für den Drahtbus (7, 8) definierten Topologieregeln, wobei die Mikroprozessormittel zur Teilnahme an einem Mutterportalwahlverfahren unter Brückenportalen geeignet sind, das eine Funktion der Verfügbarkeit freier Anschlüsse an den drahtlosen Schnittstellen von Portaleinrichtungen (3, 6, 15) der Brücke (9) ist.

11. Brückenportaleinrichtung nach Anspruch 10, wobei das vom Mikroprozessormittel ausgeführte Mutterportalwahlverfahren als Mutterportal für das drahtlose Netz das Portal mit der größten Anzahl virtueller Anschlüsse auswählt.

## Revendications

1. Procédé d'élection de parent parmi des portails de pont dans un pont sans fil transparent (9), ledit pont comprenant au moins deux portails de pont (3, 6, 15), un portail comprenant une interface sans fil et une interface vers un bus câblé, ledit procédé comprenant les étapes de :
- détermination, pour chaque portail de pont (3, 6, 15), du nombre de ports auxquels d'autres dispositifs sans fil peuvent être connectés ;
- élection d'un portail de pont (6) en tant que parent en fonction du nombre de ces ports,
- connexion des autres portails de pont (3, 15) aux ports du portail parent élu (6).

2. Procédé selon la revendication 1, où la somme du nombre de ports sur l'interface sans fil d'un portail de pont, appelés ports virtuels ci-après, et du nombre de ports physiques d'un portail de pont sur l'interface de bus câblé est limitée à un nombre prédéfini, et où le nombre respectif de ports virtuels et de ports physiques est configurable.

3. Procédé selon la revendication 1 ou 2, où le portail élu est le seul portail pouvant ou pouvant ne pas être racine sur un bus local connecté à ce portail élu.

4. Procédé selon une des revendications précédentes, comprenant en outre l'étape de déclenchement de l'élection du portail de pont parent suite à l'association d'un nouveau portail de pont.

5. Procédé selon la revendication 4, comprenant en outre l'étape de, avant de déclencher l'élection, vérification si le portail parent actuel possède un port virtuel libre, et dans l'affirmative, connexion du nouveau portail à ce port sans déclencher l'élection.

6. Procédé selon une des revendications précédentes, comprenant en outre les étapes de refus de la connexion d'un nouveau portail si la connexion du nouveau portail entraîne une topologie invalide.

7. Procédé selon une des revendications précédentes, comprenant en outre l'étape de stockage, au niveau d'un dispositif de portail, d'au moins un des éléments suivants : la cause de l'échec d'une connexion du portail au portail parent, l'échec de l'association du portail à un contrôleur central du pont sans fil, la cause de l'échec empêchant de devenir le portail parent.

8. Procédé selon les revendications 1 à 7, où le portail élu en tant que portail parent est le portail doté du plus grand nombre de ports virtuels.

9. Procédé selon une des revendications 1 à 8, où un port physique constitue un port disponible pour une connexion à un dispositif sur un bus câblé.

10. Dispositif de portail de pont (3, 6, 15) pour une connexion à un pont sans fil (9) comprenant une première interface (11) vers un bus câblé (7, 8) et une deuxième interface (12) vers le pont sans fil (9), comprenant en outre un microprocesseur pour gérer des ports sur son interface sans fil (12) pour une connexion à des dispositifs sans fil selon des règles de topologie définies pour le bus câblé (7, 8), ledit microprocesseur étant adapté pour participer à un processus d'élection de portail parent parmi des portails de pont dépendant de la disponibilité de ports libres sur les interfaces sans fil de dispositifs de portails (3, 6, 15) du pont (9).

11. Dispositif de portail de pont selon la revendication 10, où le processus d'élection de portail parent, effectué par le microprocesseur, sélectionne en tant que portail parent pour le réseau sans fil le portail doté du plus grand nombre de ports virtuels.
